# EUROPEAN PATENT SPECIFICATION

(11) **EP 3 257 697 B1**
(45) Date of publication and mention of the grant of the patent: **08.05.2019**
(21) Application number: 16174912.2
(22) Date of filing: 17.06.2016
(51) Int. Cl.: B60K 37/04, B60R 11/02

(54) **DISPLAY CARRYING DEVICE AND VEHICLE COMPRISING SAME**
ANZEIGETRAGEVORRICHTUNG UND FAHRZEUG DAMIT
DISPOSITIF DE SUPPORT D'AFFICHAGE ET VÉHICULE COMPRENANT CELUI-CI

(43) Date of publication of application: 20.12.2017
(73) Proprietor: Alpine Electronics, Inc., Tokyo (JP)
(72) Inventor: Volmer, Manfred, 70567 Stuttgart (DE)
(74) Representative: Schmitt-Nilson Schraud Waibel Wohlfrom Patentanwälte Partnerschaft mbB

(56) References cited:
- DE-A1-102011 079 216
- US-A1- 2005 117 293

## Description

The present invention relates to a display carrying device and a vehicle comprising such display carrying device.

Display carrying devices are typically used in vehicles to attach a display to a panel, such as a dashboard of the vehicle. Such display provides passengers with information, such as navigation information, vehicle settings and the like. In dangerous situations, such as accidents in which the vehicle is stopped rapidly, head injuries may occur when a head of a passenger or a driver collides with the display and display carrying device, since display carrying devices are usually very rigid and are hardly suited to provide effective protection upon an impact on the display carrying device.

JP 2005-141194 A discloses an organic display device equipped with an organic panel and a reinforcement structure disposed on the back side of the organic panel. The reinforcement structure is equipped with a base plate constituting a bonded part to the back of the organic panel and a heat radiation member disposed on the base plate.

JP 2011-128570 discloses a display device including a back light serving as at least a heat generating source and a display panel for displaying an image. In the display device, an external surface of the display panel, which is on the back light side, is provided with a vertical strut joined to the external surface of the display panel so that heat can be conducted. A vertical air passage is formed in the vertical strut so as to penetrate through it from its upper end to its lower end.

DE 10 2011 079 216 A1, which discloses the preamble of claim 1, shows a display carrier having a back wall and four sidewalls extending from the back wall to a front side of the carrier forming a rectangular space. In this space, a plurality of cooling ribs are attached on the back-wall and extend radially outwards from a central point on the back wall, the cooling ribs also extend in a nominal direction towards the front side of the carrier forming a height of the cooling ribs.

In the above described display devices, the heat conducting structures stiffen the overall structure of the display devices which may be detrimental to achieve good protection properties against head impacts.

It would be beneficial to provide an improved display carrying device for a vehicle that provides improved protection properties against head impacts while not compromising heat conduction from the display device.

The invention relates to a display carrying device and a vehicle comprising a display carrying device according to claims 1 and 15. Further embodiments are disclosed in the dependent claims.

According to the invention, the display carrying device for a vehicle comprises a carrier portion that is configured to receive a display, the carrier portion comprising a front side, a backside, a topside and a bottom side, a mounting portion that is configured to mount the display carrying device to a vehicle panel and a force absorbing portion connecting the carrier portion and the mounting portion and comprising at least two wall elements that extend from the backside of the carrier portion to the mounting portion. The at least two wall elements are configured to form at least one hollow space between the carrier portion and the mounting portion, the hollow space being open at the topside and the bottom side of the carrier portion. The at least two wall elements of the force absorbing portion are configured to be deformable at least in a normal direction of the front side of the carrier portion upon an impact on the display and are configured to absorb impact energy of the impact. Furthermore, the at least two wall elements each comprise at least a portion that extends obliquely (i.e. not parallel and not orthogonal) to the backside of the carrier portion to provide advantageous deformation properties in respect to force absorption and elasticity.

By providing a display carrying device with such force absorbing portion a display carrying device is achieved that provides improved protection properties against head impacts while not compromising heat conduction from the display and the display carrying device. Particularly it absorbs energy during an impact, in particular upon a head impact on the display.

According to an embodiment, the display carrying device is configured to absorb impact energy according ECE Regulation 21 (uniform provisions concerning the approval of vehicles with regard to their interior fittings) Annex 4 and/or standard FMVSS 201 (Federal Motor Vehicle Standards for Occupant Protection in Interior Impact) S5, in particular in a range of 15 to 100 Joules. This allows for reduced injuries to passengers in a vehicle, when an accident occurs.

At the same time, the at least one hollow space formed by the at least two wall elements between the carrier portion and the mounting portion provides an advantageous cooling for the display that is positioned on the front side of the carrier portion of the display carrying device. Improved cooling is achieved by a cooling fluid, particularly air, flowing through the at least one hollow space caused by a chimney effect. In particular, heat from the display may be transferred from the carrier portion to the force absorbing portion and transported away at the topside of the carrier portion with the cooling fluid.

The display carrying device may be made of aluminum, plastic material or a combination thereof to achieve a light weight component.

According to an embodiment the display carrying device is configured to provide an elastic deformation when an impact force comprises a range of 100 N to 300 N. The elastic deformation allows to provide a display carrying device that withstands low impact forces undamaged, such as normal use or when a passenger misuses the display positioned on the display carrying device by applying force by hand or feet.

According to an embodiment the display carrying device is configured to provide a plastic deformation when an impact force exceeds 300 N. The plastic deformation is desirable to prevent injuries to a passenger during a dangerous situation, in particular an accident.

According to an embodiment the display carrying device is configured to be mounted to a vehicle panel, in particular a dashboard, an I-panel or a seat panel of a vehicle. The vehicle can be an engine-powered vehicle, in particular an automobile.

The display carrying device is configured to provide a deceleration of less than 80 G for not more than 3ms in order to prevent injuries to the passenger, in particular injuries to the head of a passenger. The display carrying device is also configured to provide deformation in a range of 5 mm to 50 mm. The deformation is measured in a normal direction of the front side of the carrier portion of the display carrying device.

According to an embodiment the mounting portion further comprises at least one fixing portion to attach the display carrying device to the vehicle panel. Particular fixing means can be a screw, a bolt, tape or the like.

According to an embodiment the carrier portion can be of a rectangular shape, in particular a cuboid shape, with the top side and the bottom side being the longer edges and the sides being the shorter edges of the rectangular shape.

The display carrying device can be manufactured preferably by extrusion, thereby providing a cheap and efficient manufacturing process. According to an embodiment the display carrying device is configured to be casted continuously and it could be automatically machined afterwards by numeric control machining like saw, drill and cutter.

In another embodiment of the display carrying device, the force absorbing portion is configured to elastically absorb impact forces in a range between 100 N and 300 N. This allows to provide a display carrying device that withstands low impact energy undamaged. The low impact energy resulting for example from pushing with a hand on the display that is positioned on the display carrying device.

In another embodiment of the display carrying device, the force absorbing portion, in interaction with the carrier portion and the mounting portion, is configured to absorb impact energy according to at least one of the requirements of EU-regulation ECE R21 Annex 4 and/or US-standard FMVSS 201 S5. This allows for reduced injuries to passengers in a vehicle, when an accident occurs.

In another embodiment of the display carrying device, the at least two wall elements are configured to form the at least one hollow space in a honeycomb cross-section. This provides an advantageous absorption of impact energy. The at least two wall elements may each comprise a first wall element part and a second wall element part attached with an acute or obtuse or rectangular angle to one end of the first wall element part. As a result, during an impact, the at least two wall elements may fold in a controlled manner.

In another embodiment of the display carrying device, the at least two wall elements are configured to form the at least one hollow space in a trapezoidal cross-section. This is another advantageous configuration for the force absorbing portion to efficiently absorb energy and to provide a sufficient cooling for a display attached on the carrier portion.

In another embodiment of the display carrying device, the at least two wall elements are configured to form the at least one hollow space in a triangular cross-section. This configuration advantageously absorbs impact energy and provides an improved cooling for a display attached on the carrier portion.

In another embodiment of the display carrying device, the at least two wall elements are configured to form the hollow space in a rhombic cross-section. This configuration advantageously absorbs impact energy and provides an improved cooling for a display attached on the carrier portion.

In another embodiment of the display carrying device, the at least two wall elements are configured to form the at least one hollow space in an oval or circular cross-section. This configuration advantageously absorbs impact energy and provides an improved cooling for a display attached on the carrier portion.

In another embodiment of the display carrying device, the force absorbing portion comprises at least two hollow spaces, wherein at least one of the hollow spaces comprises a different cross-section than another one of the hollow spaces. This provides the display carrying device with a better control of absorption of impact energy. The cross-sections may be arranged such that areas on the carrier portion can be sufficiently cooled, in particular various portions of the carrier portion.

In another embodiment of the display carrying device, the at least two wall elements each comprise a curved profile. This provides an advantageous absorption of impact energy through controlled deformation.

In another embodiment of the display carrying device, the at least two wall elements comprise an alternating profile. This provides an advantageous absorption of impact energy through controlled deformation.

In another embodiment of the display carrying device, the force absorbing portion comprises at least two of the wall elements, in particular having different longitudinal directions, attached in series to each other. This provides a display carrying device with a structure for an advantageous absorption of impact energy through controlled deformation and a more sophisticated cooling through more voluminous hollow spaces.

In another embodiment of the display carrying device, the force absorbing portion comprises at least two of the wall elements attached to each other with an offset in a direction transverse to a normal of the front side of the carrier portion.

In another embodiment of the display carrying device, the at least two wall elements are connected to each other via another wall element. In particular, the another wall element is arranged substantially parallel to the backside of the carrier portion. This provides a higher stability for the at least two wall elements to achieve a better control of absorbing impact energy.

In another embodiment of the display carrying device, the mounting portion comprises a wall thickness in a range of 1,5- to 2,5-times the thickness of the at least two wall elements. This moves deformation energy further to the at least two wall elements that show a clean deformation. The deformation could be folding, collapsing or a combination thereof.

In another embodiment of the display carrying device, the force absorbing portion further comprises at least one wall member that extends from the topside to the bottom side of the carrier portion and is configured to connect the carrier portion and the mounting portion substantially parallel to one of the at least two wall elements. The at least one wall member has a wall thickness that is greater than the wall thickness of the at least two wall elements and comprises a notch structure along the at least one wall member configured to separate a range of a static deformation configuration and a range of a dynamic deformation configuration of the force absorbing portion. The range of static deformation configuration may comprise forces in a range between 100 N to 300 N and the range of dynamic deformation configuration comprises forces of greater than 300 N. The notch structure allows for an easier adjustability of stability and elasticity of the display carrying device and controlled absorption of low and high impact forces, respectively.

Another embodiment described herein relates to a display unit comprising a display carrying device according to the present invention and a display that is positioned on the front side of a carrier portion of the display carrying device.

All the technical effects of the features of the display carrying device also apply for the display unit.

Another embodiment described herein relates to a vehicle comprising the display carrying device as described herein attached to a vehicle panel and a display that is attached to the carrier portion of the display carrying device.

All the technical effects of the features of the display carrying device also apply for the vehicle.

Exemplary embodiments of the invention are described in greater detail below with reference to the enclosed figures.
Fig. 1 is a perspective view of a display carrying device according to an exemplary embodiment of the invention.
Fig. 2 illustrates a top view on the display carrying device of Fig.1.
Fig. 3 illustrates a top view on an exemplary embodiment of the invention, in which wall elements are distanced to a carrier portion by additional wall elements.
Fig. 4 illustrates a top view on an exemplary embodiment of the invention showing a display carrying device having hollow spaces with a trapezoidal cross-section.
Fig. 5 illustrates a top view on an exemplary embodiment of the invention having a second wall element with a notch structure.
Figs. 6a to 6c illustrate a top view on exemplary embodiments of the invention showing a display carrying device having hollow spaces with a triangular cross-section.
Fig. 7 illustrates a top view on an exemplary embodiment of the invention showing a display carrying device having hollow spaces with a rhombic cross-section.
Fig. 8 illustrates a top view on an exemplary embodiment of the invention showing a display carrying device having hollow spaces with an oval or circular cross-section.
Fig. 9 illustrates a top view on an exemplary embodiment of the invention similar to Fig.8, wall elements forming adjacent hollow spaces with an oval or circular cross-section being connected to each other by another wall element.
Fig. 10 illustrates a top view on an exemplary embodiment of the invention showing a display carrying device comprising curvilinear wall elements.

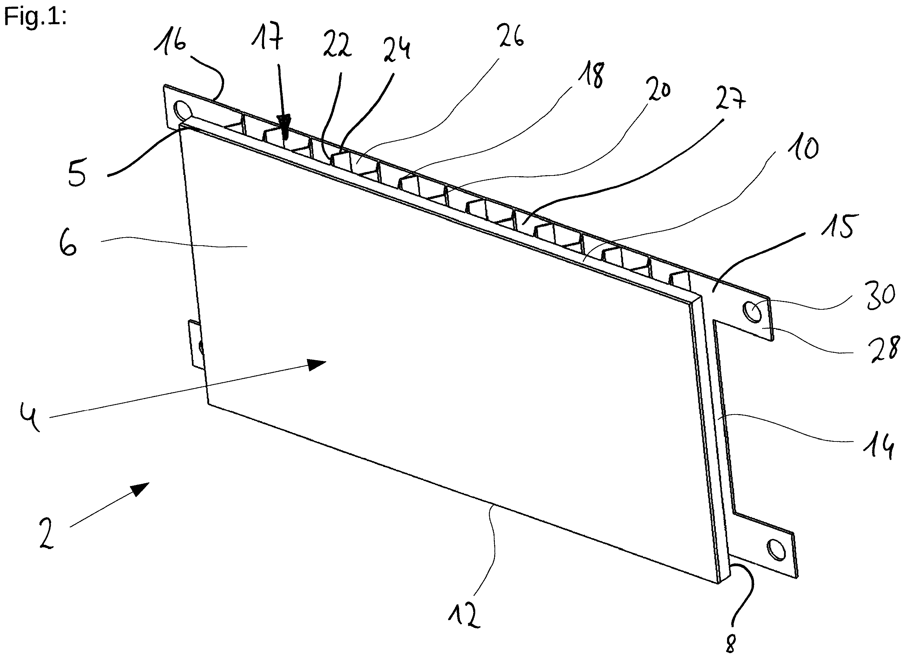

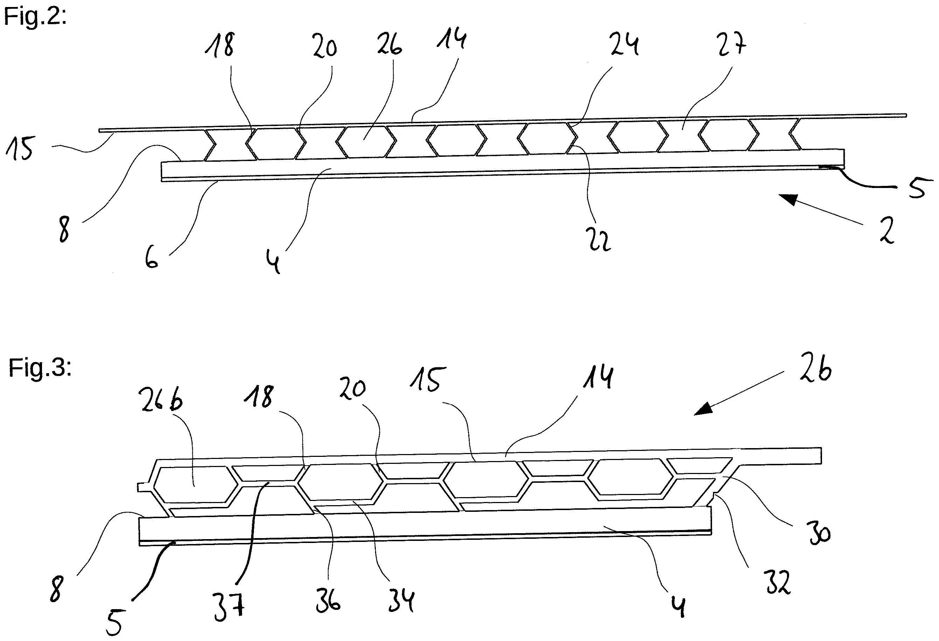

A display carrying device 2 according to an exemplary embodiment of the invention, as it is shown in Fig. 1, comprises a carrier portion 4 comprising a front side 6, a backside 8, a topside 10 and a bottom side 12, a mounting portion 14 comprising a front side 15 and a back side 16, and a force absorbing portion 17 positioned between the backside 8 of the carrier portion 4 and the front side 15 of the mounting portion 14. The carrier portion 4 and the mounting portion 14 can be arranged in parallel to each other. Fig. 2 illustrates a top view on the display carrying device 2.

The force absorbing portion 17 comprises wall elements 18 and 20 extending from the backside 8 of the carrier portion in a substantially acute angle to the front side 15 of the mounting portion 14. The wall elements 18 and 20 are arranged from the top side 10 to the bottom side 12 of the carrier portion 4. Wall elements 18 and 20 comprise a first wall element part 22 and a second wall element part 24. The wall element parts 22 and 24 may be arranged to each other in an acute or obtuse or rectangular angle forming a connection point. The wall elements 18 and 20, the backside 8 of the carrier portion 4 and the front side 15 of mounting portion 14 form at least one hollow space with a honeycomb cross-section 26. In Figs. 1 and 2, six hollow spaces with a honeycomb cross-section 26 and seven hollow spaces with an x-like cross-section 27 are shown. The hollow spaces 26 and 27 are open at the topside 10 and the bottom side 12 of the carrier portion 4 to provide a passage for cooling fluid, particularly air, to remove heat from the carrier portion 4 by flowing the cooling fluid through the hollow spaces 26 and 27 caused by a chimney effect. In particular, heat from the display may be transferred from the carrier portion to the force absorbing portion and transported away at the topside of the carrier portion with the cooling fluid.

A display 5 is positionable on the front side 6 of the carrier portion 4, the display 5 having a display cover on its front side to shield the display 5 from soiling. The display cover may be made of glass or plastic. The front side 6 of the carrier portion 4 is directed to a passenger of a vehicle. The carrier portion 4 has a rectangular structure, in particular cuboid shape with the top side 10 and the bottom side 12 of the carrier portion 4 being the longer edges and sides connecting the top side 10 and the bottom side 12 being the shorter edges of the rectangular structure. The backside 16 of the mounting portion 14 is directed to a vehicle panel, in particular a dashboard, a seat panel or an I-panel that is not shown. The mounting portion 14 comprises four fixing portions 28 each having an opening 30 for fixing means, in particular screw, bolts or the like, to mount the mounting portion 14 to the vehicle panel. The fixing portions 28 can be manufactured by removing parts of the mounting portion 14 between the fixing portions 28. This results in fixing portions 28 having a latch-like structure.

When an object, in particular a head or another part of a passenger hits the display 5 positioned on the front side 10 of the carrier portion 4 of the display carrying device 2, the force absorbing portion 17 comprising wall elements 18 and 20 to absorb impact energy of the impact by deforming, in particular by folding, bending or collapsing, at the connection point of wall elements 18 and 20 in a normal direction of the front side 6 of the carrier portion 4. This deforming mechanism decelerates the object to prevent injuries to the object. The display carrying device 2 can even rebound the object slightly to push the object back from the display 5. The deceleration is less than 80 G in a time span of 3ms. The deceleration fulfills at least the requirements of EU-regulations ECE R21 Annex 4 and/or US-standard FMVSS 201 S5. The display carrying device 2 is configured to withstand impact energy in a range of 15 to 100 Joule.

Fig. 3 illustrates a top view of an exemplary embodiment of the invention showing a display carrying device 2b. The backside 8 of the carrier portion 4 and the front side 15 of the mounting portion 14 are connected to each other by a force absorbing portion 17b. The force absorbing portion 17b comprises multiple wall elements 18 and 20 that form together with the front side 15 of the mounting portion 14 and with a wall element 34 parallel to the front side 15 multiple hollow spaces with a honeycomb cross-section 26b. At least one of the wall elements 18 is connected to the backside 8 of the carrier portion 4 by another wall element 36 that obliquely extends from the carrier portion 4 and connects wall element 18 with the backside 8. The wall elements 18 and 20 of two adjacent hollow spaces 26b are connected to each other by another wall element 37 to provide a force absorption portion 17b with a reinforcing structure.

The backside 8 of the carrier portion 4 and the front side 15 of the mounting portion 14 are also connected to each other by a wall member 30 comprising a notch structure 32 arranged on a surface of the wall member 30 in a direction parallel to the backside 8 of the carrier portion 4. The wall member 30 extends substantially from a side area of the backside 8 of the carrier portion 4 to a side area of the front side 15 of the mounting portion 14, thereby the wall member resembles an outermost wall element of the force absorbing structure 17b.

The wall member 30, in particular with the notch structure 32, may provide the display carrying device 2b with two different deformation configurations, in particular a static deformation configuration and a dynamic deformation configuration. The static deformation configuration provides an elastic deformation in cases when impact forces are lower, in particular in a range between 100 N to 300 N. In other words, the display carrying device 2b is not damaged by these impact forces. The dynamic deformation configuration provides a lasting deformation to the display carrying device 2b to absorb greater impact forces, in particular greater than 300 N. In other words, the wall member 30, in particular with the notch structure 32, breaks, when the impact forces exceed a certain limit, thereby absorbing impact forces.

When an impact by a head or another body part of a passenger occurs on the display 5 positioned on the display carrying device 2b, the wall elements 36 and the wall member 30, in interaction with the carrier portion 4, absorb a first part of impact energy to decelerate the object by deformation in a normal direction of the front side 6 of the carrier portion 4. The wall elements 18, 20 and 36, in interaction with the mounting portion 14, absorb the remaining impact energy of the impact to decelerate the object until it stops and even rebounds.

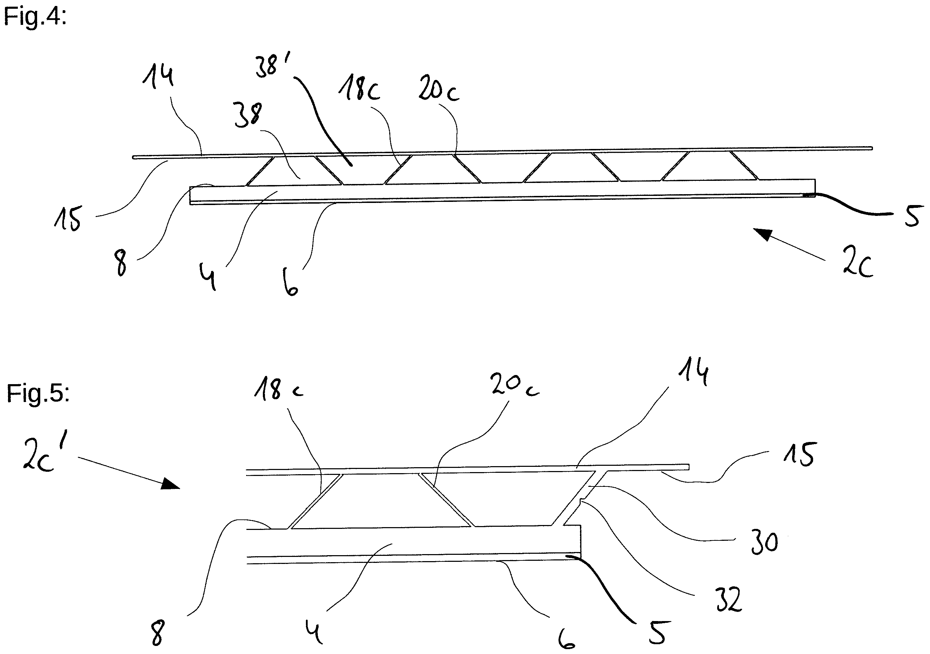

Fig. 4 illustrates a top view on an exemplary embodiment of the invention showing a display carrying device 2c in which wall elements 18c and 20c form together with the back side 8 of carrier portion 4 and the front side 15 of mounting portion 14 multiple hollow spaces with a trapezoidal cross-section 38, 38'. The wall elements 18c and 20c of hollow space 38 extend obliquely from the carrier portion 4 to the mounting portion 14 and converge towards each other and the wall elements 18c and 20c of adjacent hollow space 38' extend obliquely from the carrier portion 4 to the mounting portion 14 and diverge from each other.

Fig. 5 illustrates a top part view of an exemplary embodiment of the invention showing a display carrying device 2c' similar to Fig. 4. The wall member 30 is configured to connect the carrier portion 4 with the mounting portion 14, in particular the sides of the carrier portion 4 with sides of the mounting portion 14. Thickness of the wall member 30 is greater than thickness of wall elements 18c and 20c, to provide a better adjustable deformation of the display carrying device 2c' during normal use or during dangerous situations. The notch structure 32 provides an advantageous adjustability, since the forces necessary to break the notch structure can be determined by software or by simple tests.

When a passengers head or other body part impacts on the display 5 positioned on the display carrying device 2c', for example during an accident, a dynamic deformation occurs in which the wall member 30 brakes and absorbs parts of impact energy from the impact and the wall elements 18c and 20c absorb remaining parts of the impact energy. The wall member 30, in particular with notch structure 32, comprises the same deformation properties as disclosed in Fig. 3.

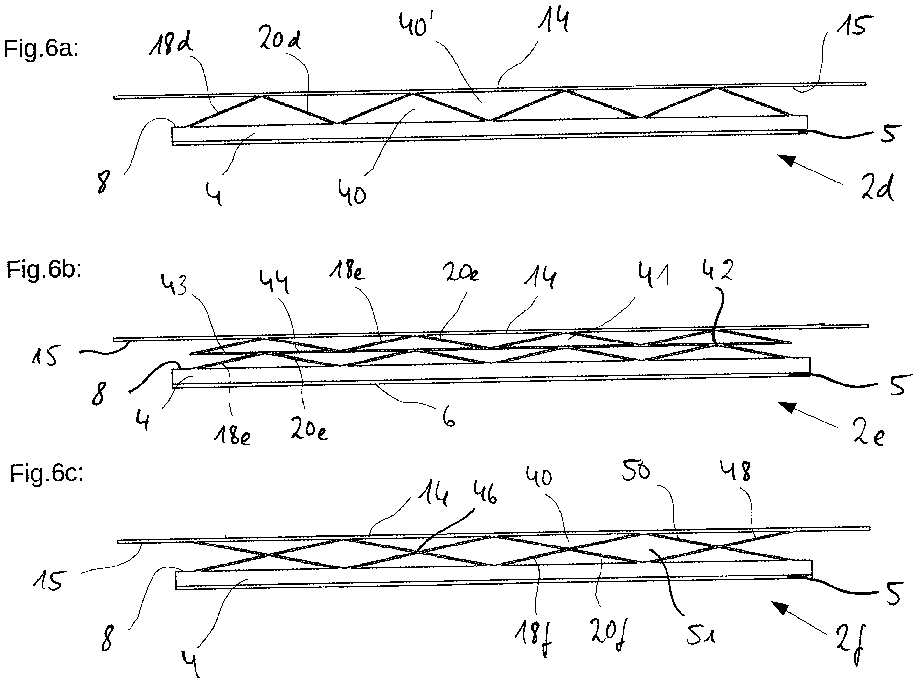

Fig. 6a illustrates a top view on an exemplary embodiment of the invention showing a display carrying device 2d in which wall elements 18d and 20d form together with carrier portion 4 or together with mounting portion 14 multiple hollow spaces with a triangular cross-section 40, 40'. The wall elements 18d and 20d extend from the carrier portion 4 to the mounting portion 14 such that the wall elements 18d and 20d touch each other at the mounting portion 14 forming one hollow space 40. The adjacent hollow space 40' is formed by the wall elements 20d and 18d extending from the mounting portion 14 to the carrier portion 4 and touching each other at the carrier portion 4.

Fig. 6b illustrates a top view on an exemplary embodiment of the invention showing a display carrying device 2e comprising hollow spaces with a fir-tree like cross-section 41. The hollow spaces 41 result from wall elements 18e and 20e that extend from the carrier portion 4 and converge towards each other until the wall elements 18e and 20e touch each other at a meeting point 42 located between the backside 8 of the carrier portion 4 and the front side 15 of the mounting portion 14, in particular halfway between the backside 8 and the front side 15.

Two wall elements 43 and 44 extend from the meeting point 42 in opposite directions substantially parallel to the backside 8 until a second end of wall elements 43 and 44 is perpendicular to ends of wall elements 18e and 20e that are in contact with the backside 8 of the carrier portion 4. Two further wall elements 18e and 20e now extend from the second ends of wall elements 43 and 44 to the front side 15 of mounting portion 14 and touch each other at the front side 15. The hollow spaces 41 deform advantageously when an impact occurs on the front side 6 of the carrier portion 4.

Fig. 6c illustrates a top view on an exemplary embodiment of the invention showing a display carrying device 2f comprising wall elements 18f and 20f that extend from the backside 8 of the carrier portion 4 and converge towards each other until the wall elements 18f and 20f touch each other at a meeting point 46 between the backside 8 of the carrier portion 4 and the front side 15 of the mounting portion 14, in particular halfway between the backside 8 and the front side 15. A wall element 48 extends from the meeting point 46 along the direction of wall element 18f to the front side 15 of the mounting portion 14. A wall element 50 extends from the meeting point 46 along the direction of wall element 20f to the front side 15 of the mounting portion 14. The wall elements 18f, 20f, 48 and 50 form an x-like structure as a force absorbing portion 17f. The resulting hollow spaces have a triangular cross-section 40 or a rhombic cross-section 51.

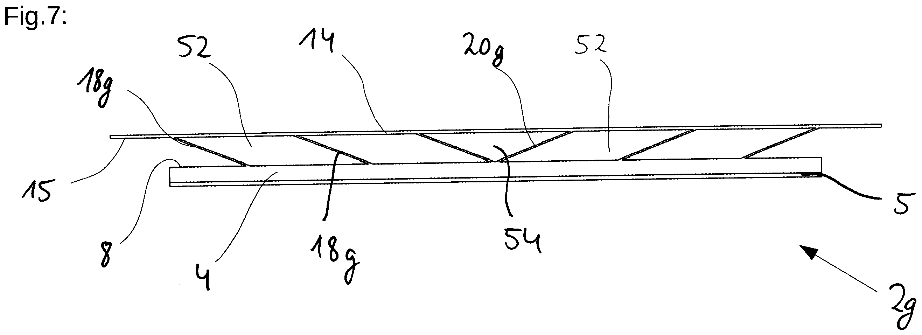

Fig. 7 illustrates a top view on an exemplary embodiment of the invention showing a display carrying device 2g comprising two wall elements 18g and 18g and two wall elements 20g and 20g that form together with the backside 8 of the carrier portion 4 and with the front side 15 of the mounting portion 14 hollow spaces with a rhombic cross-section 52. The wall elements 18g and 20g extend from the backside 8 of the carrier portion 4 to the front side 15 of the mounting portion 14. The wall elements 18g and 20g can be oriented from a more central position on the backside 8 of the carrier portion 4 to an outward position on the front side 15 of the mounting portion 14. The wall elements 18g and 20g positioned in the most central position form together with the front side 15 a hollow space with a triangular cross-section 54.

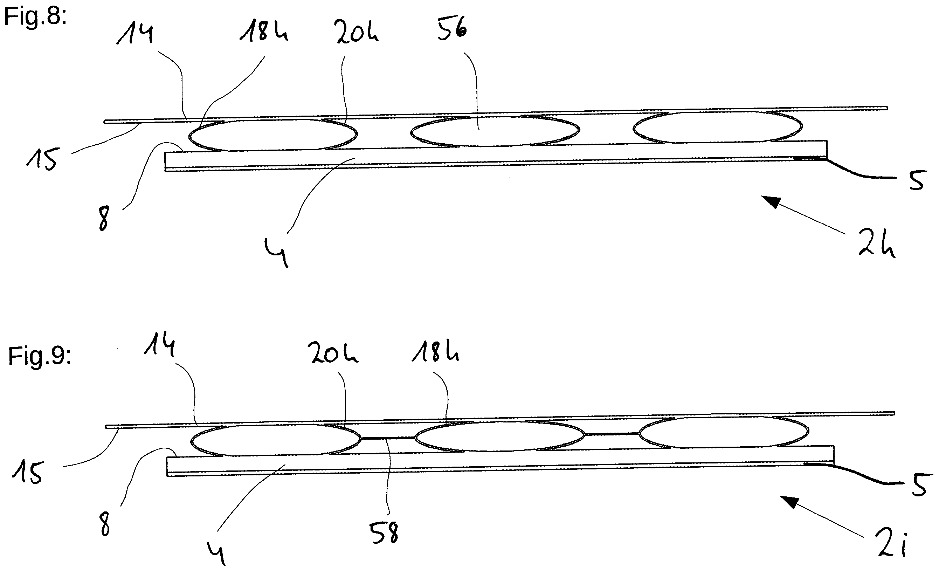

Fig. 8 illustrates a top view on an exemplary embodiment of the invention showing a display carrying device 2h comprising bent wall elements 18h and 20h forming together with the backside 8 of the carrier portion 4 and the front side 15 of the mounting portion 14 hollow spaces with an oval or circular cross-section 56. The bent wall elements 18h and 20h provide the display carrying device 2h with a spring-characteristic to advantageously prevent defects to the display 5 positioned on the display carrying device 2h.

Fig. 9 illustrates a top view on an exemplary embodiment of the invention similar to Fig.8 showing a display carrying device 2i comprising the bent wall elements 18h and 20h, the wall elements 18h and 20h forming adjacent hollow spaces 56 are connected to each other by a wall element 58 that is substantially oriented in a parallel direction to the backside 8 of the carrier portion 4. The wall element 58 shows a preferable option to provide a more rigid structure for the display carrying device 2i to reduce deformation during an impact on the display 5 positioned on the front side 6 of the carrier portion 4. This is advantageous when deflection of the display carrying device 2i is limited.

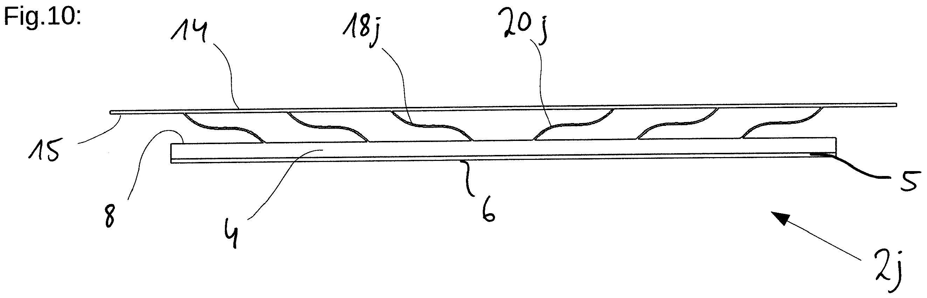

Fig. 10 illustrates a top view on an exemplary embodiment of the invention showing a display carrying device 2j comprising curvilinear wall elements 18j and 20j. The wall elements 18j and 20j connect the backside 8 of the carrier portion 4 to the front side 15 of the mounting portion. The wall elements 18j and 20j each comprise a parabolic-like shape when viewed from the topside 10 of the carrier portion 4 achieving a higher elasticity for the display carrying device 2j, thereby reducing the risk of damaging the display carrying device 2j when an impact on the display 5 positioned on the front side 6 of the carrier portion 4 occurs. Three wall elements 18j are arranged from a central position of the carrier portion 4 to a left side of carrier portion 4 and three wall elements 20j are arranged from the central position of the carrier portion 4 to a right side of carrier portion 4. Multiple wall elements 18j and 20j exceeding three wall elements each are also possible. The wall elements 18j and 20j are arranged to each other that ends of the wall elements 18j and 20j positioned on the backside 8 of the carrier portion 4 are arranged in closer proximity to each other than ends of the wall elements 18j and 20j positioned on the front side 15 of the mounting portion 14.

The thickness of the mounting portion 14 is in a range of 1,5 to 2,5-times the thickness of the wall elements of the force absorbing portions. The thickness of the wall elements is in a range of 0,4 mm to 1 mm.

The hollow spaces described herein are open at the topside 10 and the bottom side 12 of the carrier portion 4 to provide a passage for cooling fluid to remove heat from the carrier portion 4 by flowing the cooling fluid through the hollow spaces 26 and 27 caused by a chimney effect. In particular heat from the display may be transferred from the carrier portion to the force absorbing portion and transported away at the topside of the carrier portion with the cooling fluid.

## Claims

1. A display carrying device (2) for a vehicle comprising:
a carrier portion (4) that is configured to receive a display (5), the carrier portion (4) comprising a front side (6), a backside (8), a topside (10) and a bottom side (12);
a mounting portion (14) that is configured to mount the display carrying device (2) to a vehicle panel;
a force absorbing portion (17) connecting the carrier portion (4) and the mounting portion (14) and comprising at least two wall elements (18, 20) that extend from the backside (8) of the carrier portion (4) to the mounting portion (14);
wherein the at least two wall elements (18,20) are configured to form at least one hollow space (26, 26c, 38, 40, 42, 51, 52, 54, 56) between the carrier portion (4) and the mounting portion (14), the hollow space (26, 26c, 38, 40, 42, 51, 52, 54, 56) being open at the topside (10) and the bottom side (12) of the carrier portion (4) to allow a cooling fluid to flow through the at least one hollow space (26, 26c, 38, 40, 42, 51, 52, 54, 56),
wherein the at least two wall elements (18,20) of the force absorbing portion (17) are configured to be deformable at least in a normal direction of the front side (6) of the carrier portion (4) upon an impact on the display (5) and are configured to absorb impact energy of the impact;
wherein the at least two wall elements (18,20) each comprise at least a portion that extends obliquely to the backside (8) of the carrier portion.

2. Display carrying device (2) according to claim 1, wherein the force absorbing portion (17) is configured to absorb impact energy in a range between 15 J and 100 J.

3. Display carrying device (2) according to claim 1 or 2, wherein the force absorbing portion (17) is configured to elastically absorb impact forces in a range between 100 N and 300 N.

4. Display carrying device (2) according to any of claims 1 to 3, wherein at least two of the wall elements (18, 20) are configured to form the at least one hollow space with a honeycomb cross-section (26).

5. Display carrying device (2c) according to any of claims 1 to 4, wherein at least two of the wall elements (18c, 20c) are configured to form the at least one hollow space with a trapezoidal cross-section (38).

6. Display carrying device (2d, 2e, 2f) according to any of claims 1 to 5, wherein at least two of the wall elements (18d, 20d, 18e, 20e, 18f, 20f) are configured to form the at least one hollow space in a triangular cross-section (40).

7. Display carrying device (2g) according to any of claims 1 to 6, wherein at least two of the wall elements (18g, 20g) are configured to form the at least one hollow space in a rhombic cross-section (52).

8. Display carrying device (2h, 2i) according to any of claims 1 to 7, wherein at least two of the wall elements (18h, 20h) are configured to form the at least one hollow space in an oval or circular cross-section (56).

9. Display carrying device (2j) according to any of claims 1 to 8, wherein at least two of the wall elements (18j, 20j) each comprise a curved cross-section.

10. Display carrying device (2) according to any of claims 1 to 9, wherein at least two of the wall elements (18, 20) comprise an alternating cross-section.

11. Display carrying device (2e, 2f) according to any of claims 1 to 10, wherein the at least two wall elements (18f, 20f, 48, 50) each comprise two wall elements having different longitudinal directions attached in series to each other in normal direction of the front side (6) of the carrier portion (4).

12. Display carrying device (2) according to any of claims 1 to 11, wherein the at least two wall elements (18, 20) are connected to each other via another wall element (37,58).

13. Display carrying device (2b) according to any of claims 1 to 12, wherein the mounting portion (14) comprises a wall thickness in a range of 1,5- to 2,5-times the thickness of the at least two wall elements (18, 20.

14. Display carrying device (2) according to any of claims 1 to 13, wherein the force absorbing portion (17) further comprises at least one wall member (30) that extends from the topside (10) to the bottom side (12) of the carrier portion (4) and is configured to connect the carrier portion (4) and the mounting portion (14), wherein the wall member (30) has a wall thickness that is greater than a wall thickness of the at least two wall elements (18, 20), wherein the wall member (30) comprises a notch structure (32) along the wall member (30) configured to separate a range of a static deformation configuration and a range of a dynamic deformation configuration of the force absorbing portion (17); wherein the range of static deformation configuration comprises forces between 100N to 300N and the range of dynamic deformation configuration comprises forces of greater than 300N.

15. A vehicle, comprising the display carrying device (2) according to any of claims 1 to 14 mounted to a vehicle panel and a display (5) that is positioned on the carrier portion (4) of the display carrying device (2).

## Patentansprüche

1. Anzeigetragevorrichtung (2) für ein Fahrzeug, aufweisend:
einen Trägerbereich (4), der zum Aufnehmen einer Anzeige (5) ausgebildet ist, wobei der Trägerbereich (4) eine Vorderseite (6), eine Rückseite (8),
eine Oberseite (10) und eine Unterseite (12) aufweist;
einen Befestigungsbereich (14), der zur Befestigung der Anzeigetragevorrichtung (2) an einem Fahrzeugtafelement ausgebildet ist;
einen Kraftaufnahmebereich (17), der den Trägerbereich (4) und den Befestigungsbereich (14) miteinander verbindet und mindestens zwei Wandelemente (18, 20) aufweist, die sich von der Rückseite (8) des Trägerbereichs (4) zu dem Befestigungsbereich (14) erstrecken;
wobei die mindestens zwei Wandelemente (18, 20) dazu ausgebildet sind, mindestens einen Hohlraum (26, 26c, 38, 40, 42, 51, 52, 54, 56) zwischen dem Trägerbereich (4) und dem Befestigungsbereich (14) zu bilden, wobei der Hohlraum (26, 26c, 38, 40, 42, 51, 52, 54, 56) an der Oberseite (10) und der Unterseite (12) des Trägerbereichs (4) offen ist, damit ein Kühlfluid durch den mindestens einen Hohlraum (26, 26c, 38, 40, 42, 51, 52, 54, 56) strömen kann,
wobei die mindestens zwei Wandelemente (18, 20) des Kraftaufnahmebereichs (17) derart ausgebildet sind, dass sie bei einem Aufprall auf der Anzeige (5) zumindest in einer senkrechten Richtung zur Vorderseite (6) des Trägerbereichs (4) verformbar sind sowie dazu ausgebildet sind, Aufprallenergie des Aufpralls zu absorbieren;
wobei die mindestens zwei Wandelemente (18, 20) jeweils mindestens einen Bereich aufweisen, der sich schräg zur Rückseite (8) des Trägerbereichs erstreckt.

2. Anzeigetragevorrichtung (2) nach Anspruch 1,
wobei der Kraftaufnahmebereich (17) dazu ausgebildet ist, Aufprallenergie in einem Bereich zwischen 15 J und 100 J zu absorbieren.

3. Anzeigetragevorrichtung (2) nach Anspruch 1 oder 2,
wobei der Kraftaufnahmebereich (17) dazu ausgebildet ist, Aufprallkräfte in einem Bereich zwischen 100 N und 300 N elastisch zu absorbieren.

4. Anzeigetragevorrichtung (2) nach einem der Ansprüche 1 bis 3,
wobei mindestens zwei der Wandelemente (18, 20) dazu ausgebildet sind, den mindestens einen Hohlraum mit einem wabenförmigen Querschnitt (26) zu bilden.

5. Anzeigetragevorrichtung (2c) nach einem derAnsprüche 1 bis 4,
wobei mindestens zwei der Wandelemente (18c, 20c) dazu ausgebildet sind, den mindestens einen Hohlraum mit einem trapezförmigen Querschnitt (38) zu bilden.

6. Anzeigetragevorrichtung (2d, 2e, 2f) nach einem der Ansprüche 1 bis 5,
wobei mindestens zwei der Wandelemente (18d, 20d, 18e, 20e, 18f, 20f) dazu ausgebildet sind, den mindestens einen Hohlraum mit einem dreieckigen Querschnitt (40) zu bilden.

7. Anzeigetragevorrichtung (2g) nach einem derAnsprüche 1 bis 6,
wobei mindestens zwei der Wandelemente (18g, 20g) dazu ausgebildet sind, den mindestens einen Hohlraum mit einem rhombischen Querschnitt (52) zu bilden.

8. Anzeigetragevorrichtung (2h, 2i) nach einem der Ansprüche 1 bis 7,
wobei mindestens zwei der Wandelemente (18h, 20h) dazu ausgebildet sind, den mindestens einen Hohlraum mit einem ovalen oder kreisförmigen Querschnitt (56) zu bilden.

9. Anzeigetragevorrichtung (2j) nach einem derAnsprüche 1 bis 8,
wobei mindestens zwei der Wandelemente (18j, 20j) jeweils einen gekrümmten Querschnitt aufweisen.

10. Anzeigetragevorrichtung (2) nach einem der Ansprüche 1 bis 9,
wobei mindestens zwei der Wandelemente (18, 20) einen alternierenden Querschnitt aufweisen.

11. Anzeigetragevorrichtung (2e, 2f) nach einem der Ansprüche 1 bis 10,
wobei die mindestens zwei Wandelemente (18e, 20e, 48, 50) jeweils zwei Wandelemente mit unterschiedlichen Längsrichtungen aufweisen, die in senkrechter Richtung zur Vorderseite (6) des Trägerbereichs (4) in Reihe aneinander angebracht sind.

12. Anzeigetragevorrichtung (2) nach einem der Ansprüche 1 bis 11,
wobei die mindestens zwei Wandelemente (18, 20) über ein weiteres Wandelement (37, 58) miteinander verbunden sind.

13. Anzeigetragevorrichtung (2b) nach einem der Ansprüche 1 bis 12,
wobei der Befestigungsbereich (14) eine Wandstärke im Bereich des 1,5-bis 2,5-fachen der Dicke der mindestens zwei Wandelemente (18, 20) aufweist.

14. Anzeigetragevorrichtung (2) nach einem derAnsprüche 1 bis 13,
wobei der Kraftaufnahmebereich (17) ferner mindestens ein Wandelement (30) aufweist, das sich von der Oberseite (10) zur Unterseite (12) des Trägerbereichs (4) erstreckt und dazu ausgebildet ist, den Trägerbereich (4) und den Befestigungsbereich (14) zu verbinden, wobei das Wandelement (30) eine Wandstärke aufweist, die größer ist als eine Wandstärke der mindestens zwei Wandelemente (18, 20), wobei das Wandelement (30) eine Kerbstruktur (32) entlang des Wandelements (30) aufweist, die dazu ausgebildet ist, einen Bereich einer statischen Verformungskonfiguration und einen Bereich einer dynamischen Verformungskonfiguration des Kraftaufnahmebereichs (17) voneinander zu trennen; wobei der Bereich der statischen Verformungskonfiguration Kräfte zwischen 100N und 300N umfasst und der Bereich der dynamischen Verformungskonfiguration Kräfte von mehr als 300N umfasst.

15. Fahrzeug mit der Anzeigetragevorrichtung (2) nach einem der Ansprüche 1 bis 14, die an einem Fahrzeugtafelelement angebracht ist, und mit einer Anzeige (5), die auf dem Trägerbereich (4) der Anzeigetragevorrichtung (2) positioniert ist.

## Revendications

1. Dispositif supportant un écran (2) pour un véhicule, comprenant :
une portion (4) faisant office de support qui est configurée pour recevoir un écran (5), la portion (4) faisant office de support comprenant un côté avant (6), un côté arrière (8), un côté supérieur (10) et un côté inférieur (12) ;
une portion de montage (14) qui est configurée pour le montage du dispositif supportant un écran (2) sur un tableau de bord de véhicule ;
une portion d'absorption de force (17) reliant la portion (4) faisant office de support et la portion de montage (14) et comprenant au moins deux éléments (18, 20) faisant office de parois qui s'étendent à partir du côté arrière (8) de la portion (4) faisant office de support jusqu'à la portion de montage (14) ;
dans lequel lesdits au moins deux éléments (18, 20) faisant office de parois sont configurés pour former au moins un espace creux (26, 26c, 38, 40, 42, 51, 52, 54, 56) entre la portion (4) faisant office de support et la portion de montage (14), l'espace creux (26, 26c, 38, 40, 42, 51, 52, 54, 56) étant ouvert au côté supérieur (10) et au côté inférieur (12) de la portion (4) faisant office de support pour permettre à un fluide de refroidissement de s'écouler à travers ledit au moins un espace creux (26, 26c, 38, 40, 42, 51, 52, 54, 56) ;
dans lequel lesdits au moins deux éléments (18, 20) faisant office de parois de la portion d'absorption de force (17) sont configurés pour pouvoir être déformés au moins dans une direction normale par rapport au côté avant (6) de la portion (4) faisant office de support en cas de choc sur l'écran (5) et sont configurés pour absorber l'énergie du choc ;
dans lequel lesdits au moins deux éléments (18, 20) faisant office de parois comprennent chacun au moins une portion qui s'étend en oblique par rapport au côté arrière (8) de la portion faisant office de support.

2. Dispositif supportant un écran (2) selon la revendication 1, dans lequel la portion d'absorption de force (17) est configurée pour absorber l'énergie du choc dans une plage entre 15 J et 100

3. Dispositif supportant un écran (2) selon la revendication 1 ou 2, dans lequel la portion d'absorption de force (17) est configurée pour absorber de manière élastique des forces de choc dans une plage entre 100 N et 300 N.

4. Dispositif supportant un écran (2) selon l'une quelconque des revendications 1 à 3, dans lequel au moins deux desdits éléments (18, 20) faisant office de parois sont conçus pour configurer ledit au moins un espace creux avec une section transversale (26) en forme de nid d'abeilles.

5. Dispositif supportant un écran (2c) selon l'une quelconque des revendications 1 à 4, dans lequel au moins deux desdits éléments (18c, 20c) faisant office de parois sont conçus pour configurer ledit au moins un espace creux avec une section transversale (38) de forme trapézoïdale.

6. Dispositif supportant un écran (2d, 2e, 2f) selon l'une quelconque des revendications 1 à 5, dans lequel au moins deux desdits éléments (18d, 20d, 18e, 20e, 18f, 20f) faisant office de parois sont conçus pour configurer ledit au moins un espace creux avec une section transversale (40) de forme triangulaire.

7. Dispositif supportant un écran (2g) selon l'une quelconque des revendications 1 à 6, dans lequel au moins deux desdits éléments (18g, 20g) faisant office de parois sont conçus pour configurer ledit au moins un espace creux avec une section transversale (52) de forme rhomboïde.

8. Dispositif supportant un écran (2h, 2i) selon l'une quelconque des revendications 1 à 7, dans lequel au moins deux desdits éléments (18h, 20h) faisant office de parois sont conçus pour configurer ledit au moins un espace creux avec une section transversale (56) de forme ovale ou circulaire.

9. Dispositif supportant un écran (2j) selon l'une quelconque des revendications 1 à 8, dans lequel au moins deux desdits éléments (18j, 20j) faisant office de parois comprennent chacun une section transversale courbe.

10. Dispositif supportant un écran (2) selon l'une quelconque des revendications 1 à 9, dans lequel au moins deux desdits éléments (18, 20) faisant office de parois comprennent une section transversale alternée.

11. Dispositif supportant un écran (2e, 2f) selon l'une quelconque des revendications 1 à 10, dans lequel lesdits au moins deux desdits éléments (18f, 20f, 48, 50) faisant office de parois comprennent chacun deux éléments faisant office de paroi possédant des directions longitudinales différentes, montés en série l'un par rapport à l'autre dans une direction normale par rapport au côté avant (6) de la portion (4) faisant office de support.

12. Dispositif supportant un écran (2) selon l'une quelconque des revendications 1 à 11, dans lequel lesdits au moins deux éléments (18, 20) faisant office de parois sont reliés l'un à l'autre via un autre élément (37, 58) faisant office de paroi.

13. Dispositif supportant un écran (2b) selon l'une quelconque des revendications 1 à 12, dans lequel la portion de montage (14) comprend une épaisseur de paroi dans une plage qui représente de 1,5 à 2,5 fois l'épaisseur desdits au moins deux éléments (18, 20) faisant office de parois.

14. Dispositif supportant un écran (2) selon l'une quelconque des revendications 1 à 13, dans lequel la portion d'absorption de force (17) comprend également au moins un élément (30) faisant office de paroi qui s'étend à partir du côté supérieur (10) jusqu'au côté inférieur (12) de la portion (4) faisant office de support et qui est configuré pour relier la portion (4) faisant office de support et la portion de montage (14) ; dans lequel l'élément (30) faisant office de paroi possède une épaisseur de paroi qui est supérieure à une épaisseur de paroi desdits au moins deux éléments (18, 20) faisant office de parois ; dans lequel l'élément (30) faisant office de paroi comprend une structure (32) en forme d'encoche le long de l'élément (30) faisant office de paroi, configurée pour séparer une plage d'une configuration de déformation statique et une plage d'une configuration de déformation dynamique de la portion d'absorption de force (17) ; dans lequel la plage de configuration de déformation statique comprend des forces entre 100 N et 300 N et la plage de configuration de déformation dynamique comprend des forces supérieures à 300 N.

15. Véhicule comprenant le dispositif supportant un écran (2) selon l'une quelconque des revendications 1 à 14 monté sur un tableau de bord de véhicule et un écran (5) qui est disposé sur la portion (4) faisant office de support, du dispositif supportant un écran (2).
